**Europäisches Patentamt**

**European Patent Office**

**Office européen des brevets**

(19)

(11) Veröffentlichungsnummer: **0 271 891**

**A2**

(12)

# EUROPÄISCHE PATENTANMELDUNG

(21) Anmeldenummer: **87118628.4**

(51) Int. Cl.⁴: **H02G 3/04**

(22) Anmeldetag: **16.12.87**

(30) Priorität: **17.12.86 DE 3643105**
**02.10.87 DE 3733329**

(43) Veröffentlichungstag der Anmeldung:
**22.06.88 Patentblatt  88/25**

(84) Benannte Vertragsstaaten:
**AT BE CH DE FR GB IT LI LU NL SE**

(71) Anmelder: **Schifferle, Johann Paul**
**Aindorferstrasse 130**
**D-8000 München 21(DE)**

(72) Erfinder: **Schifferle, Johann Paul**
**Aindorferstrasse 130**
**D-8000 München 21(DE)**

(54) **Kabelführungskanal zur Aufnahme von Starkstrom- und Fernmeldekabel.**

(57) Die Erfindung bezieht sich auf einen Kabelführungskanal insbesondere aus Kunststoff zur Aufnahme von Kabeln unterschiedlichen Potentials. Bei diesem Kanal wird aus Kostengründen und auch zur Einsparung von Transportraum auf die Rückwand verzichtet. Stattdessen werden Wandklammern verwendet, die beidseitig in die Wandklammern überbrückenden Seitenwände einrasten bzw. eingesteckt werden. Vorderseitig werden die Seitenwände von Verschlußklammern zusammengehalten und schließlich von einem Verschlußdeckel abgedeckt.

EP 0 271 891 A2

Xerox Copy Centre

## Kabelführungskanal zur Aufnahme von Starkstrom-und Fernmeldekabel

Die Erfindung bezieht sich auf einen Kabelführungskanal gemäß dem Gattungsbegriff des Patentanspruchs 1.

Derartige Kabelkanäle sind bekannt, wie z.B. die DE-AS 22 46 512 zeigt. Dort sind die Halteelemente als Kastenprofilstücke ausgebildet, die von Seitenteilen und einem Verschlußdeckel überbrückt werden. Die Vorderwände sind schlitzartig für das Einlegen der Kabel ausgespart. Die Herstellung solcher Elemente ist jedoch relativ aufwendig und der Zusammenbau mit den Seitenteilen kompliziert. Außerdem beanspruchen die kastenförmigen Halteelemente bei ihrer Lagerung und bei ihrem Transport viel Raum.

Der Erfindung liegt nun die Aufgabe zugrunde, einen kostengünstigen Kabelkanal zu schaffen, der eine leichte Montage, ein bequemes Einlegen der Kabel und außerdem noch ein sauberes Ein-und Ausführen der Kabel aus dem Kabelkanal ermöglicht. Darüber hinaus soll der Kabelkanal bei seiner Lagerung und seinem Transport möglichst wenig Raum durch Verwendung stapelfähiger Elemente beanspruchen.

Diese Aufgabe wird durch Schaffung eines rückwandlosen Kabelkanals gemäß den Merkmalen der Patentansprüche 1 bis 13 gelöst.

Die Halteelemente nun nach der erfindungsgemäßen Lösung als streifenförmige Wand-und Verschlußklammern auszubilden, macht kostspielige Werkzeuge für die Herstellung U-förmiger Extruderfabrikate entbehrlich, weil die Klammern auch durch Spritzen hergestellt werden können. Da sämtliche Einzelteile streifenförmig ausgebildet sind, ergibt sich eine günstige Stapelfähigkeit der Kanaleinzelteile. Um diesen Vorteil zu vergrößern, sind die Seitenwandelemente noch mit besonderen Anlageflächen versehen.

Für eine komplette Kabelkanalgarnitur wird mit diesem Kanalsystem bei seiner Lagerung und bei seinem Transport eine Raumersparnis von ca. 65% erreicht. Durch den Fortfall der Rückwand ergibt sich eine Materialersparnis von ca. 35% und im Betriebszustand eine wirksame Wärmeableitung direkt an die Befestigungswand. Das System selbst mit den streifenförmigen Elementen ohne Rückwand bietet beim Hantieren mit leichten Teilen eine bequeme Montage.

Ferner lassen sich dieselben Wandklammern auch als Zwischenklammern verwenden. Bei Anbringung von weiteren Halteelementen an den Innenwänden der Seitenwände kann der Kanalraum parallel zu seiner Befestigungsebene nochmals geteilt werden. Dadurch entsteht ein sogenannter Rangierraum für das Herausführen von Kabeln. Es entfällt damit das Herausbrechen von Trennwandabschnitten. Ferner werden beim Rangieren der Kabel die Kabel in den benachbarten Kabeletagen nicht gekreuzt, so wie es bei einem Kabelkanal mit Hilfe von Metallbügeln in dem DE-GM 17 98282 gezeigt ist.

Um eine sichere Verrastung der Klammern mit den Seitenteilen zu gewährleisten, sind nach einer weiteren Ausgestaltung der Erfindung die mit rechtwinkligen Abwinkelungen versehenen Einschnappnuten und Einschnappwulste an hinterschnittenen Flächen verankert.

Für die Anordnung von Trennwänden werden an den Innenwandungen der Wandklammern C-förmige Halteleisten zur Bildung von T-förmigen Nuten vorgesehen, wie sie bereits in der DE-AS 11 87 701 beschrieben sind. Dadurch wird der Einsatz von Trennwänden ermöglicht, wodurch sich Kabelpartien unterschiedlichen Potentials in einem Kanal getrennt verlegen lassen. Werden ferner einige Schalterdosen oder dgl. benötigt, so können diese beim Einsetzen zusätzlicher Wandklammern in ihren C-förmigen Halteleisten ebenfalls gehalten werden.

Einen besonderen Vorteil liefert das rückwandlose Kanalsystem, wenn auf der Baustelle nachträglich festgestellt wird, daß das Raumangebot eines bereits verlegten Kanals nicht ausreicht. Der Innenraum eines verlegten Kanals läßt sich verdoppeln bzw. verdreifachen durch einmaliges oder zweimaliges Aufsetzen von Kanalabschnitten auf das bereits verlegte Kanalsystem. Hierfür sind lediglich andere Seitenteile mit Fortsätzen erforderlich, die an ihrer Enden mit denselben Einschnappwulsten versehen sind, wie die Verschlußdeckel des Kanals. Hierfür wird auf den ersten, bereits befestigten Kanalabschnitt anstatt des Verschlußdeckels nun ein zweiter bzw. ein dritter Kanalabschnitt mit Fortsätzen - ein sogenanntes Aufbauelement - aufgerastet. Dadurch läßt sich ein Kanalraum mit zweifacher bzw. dreifacher Tiefe erzielen, so wie er häufig stellenweise bei Kanalkreuzungen und bei der Schaffung von Klemmräumen erforderlich ist.

Schließlich lassen sich für eine vorteilhafte Ausgestaltung der Erfindung außermittig angeordnete zusätzliche, schienenartige Halteelemente an den Innenwandungen der Seitenteile bei den Aufbauelementen noch für die Halterung von besonderen Stecknutenleisten verwenden, an denen Klemmleistensätze oder dgl. gehalten werden können.

Eine Variante stellt die Ausführungsform der Wandklammern und der übrigen Einzelteile dar, die durch Zusammenstecken montiert werden können.

Die rechtwinklige Anordnung von Aufsteckleisten an den Wandklammern ermöglicht nämlich durch die Anwendung des Nut-und Federprinzips eine bequeme Montage durch bloßes Aufstecken der Seitenwände auf die Wandklammern. Für die Erhöhung der Stabilität sorgen die mehrstufigen, beidseitig angeordneten Restkanten an den Verankerungselementen.

Ebenso wird die Halterung des Verschlußdeckels in den Nuten der Seitenwandungen bei der Variante verbessert, indem für die Federleiste des Verschlußdeckels in den Seitenwänden eine zusätzliche Nut vorgesehen wird, die über die gesamte Länge eine stramme Verrastung zwischen den Seitenwänden und dem Verschlußdeckel garantiert.

Einen besonderen Vorteil bilden die Verstärkungen an den Randbereichen der Einzelteile. Dadurch wird neben einer höheren Stabilität auch eine Materialeinsparung erreicht.

Alle Einzelteile erhalten rechtwinklig abgewinkelte Verankerungselemente. Damit läßt sich eine raumsparende Stapelung erzielen. Nach der Erfindung schließt der Verschlußdeckel mit den Außenflächen der beiden Seitenwände bündig ab. Dies ermöglicht auch eine Montage des Kanals unmittelbar unter einer Decke. Eine Behinderung beim Aufsetzen bzw. beim Abziehen des Deckels tritt nicht ein.

Das Kanalsystem nach der Erfindung läßt sich schließlich auch für die Verlegung von Kunststoffleitungen und Stahlrohren verwenden; also auch für Gas-und Flüssigkeitsleitungen.

Die Erfindung wird nachstehend anhand der Zeichnung im einzelnen beschrieben. Es zeigen:

Fig. 1 den erfindungsgemäßen Kabelführungskanal in perspektivischer Darstellung ohne Verschlußdeckel,

Fig 2 den Kanal nach Fig. 1 mit Innenraumtestückung,

Fig. 3 die querschnittliche Darstellung des Kanals aus Fig. 1, jedoch mit eingesetzter Zwischenklammer,

Fig. 4 die Verschlußdeckel ineinandergelegt,

Fig. 5 die Verschlußklammern ineinandergelegt,

Fig. 6 die Wandklammern ineinandergelegt

Fig. 7 und 8 zwei Stapelmöglichkeiten der Seitenwände,

Fig. 9 den Kanal mit eingesetzten Trennwänden und eingesetzter Schalterdose,

Fig. 10 eine Wandklammer für die Halterung einer Schalterdose mit bodenseitigen Stütz-und Halteelementen,

Fig. 11 ein Aufbauelement, verwendet als Klemmkasten,

Fig. 12 ein Aufbauelement als Klemmkasten in Vorderansicht,

Fig. 13 eine Seitenwand eines Aufbauelementes mit einer Stecknutenleiste,

Fig. 14 den Kabelführungskanal nach einer Variante,

Fig. 15 die querschnittliche Darstellung des Kanals nach Fig. 14,

Fig. 16 die querschnittliche Darstellung des Kabelführungskanals mit einer Geräteklammer,

Fig. 17 bis 22 die querschnittliche Darstellung der Einzelteile nach der Variante, so wie sie sich raumsparend stapeln lassen.

Fig. 23 eine Geräteklammer mit montierter Gerätedose,

Fig. 24 ein Verschlußdeckelteil mit einer mittigen Öffnung für den Durchtritt einer Steckdose.

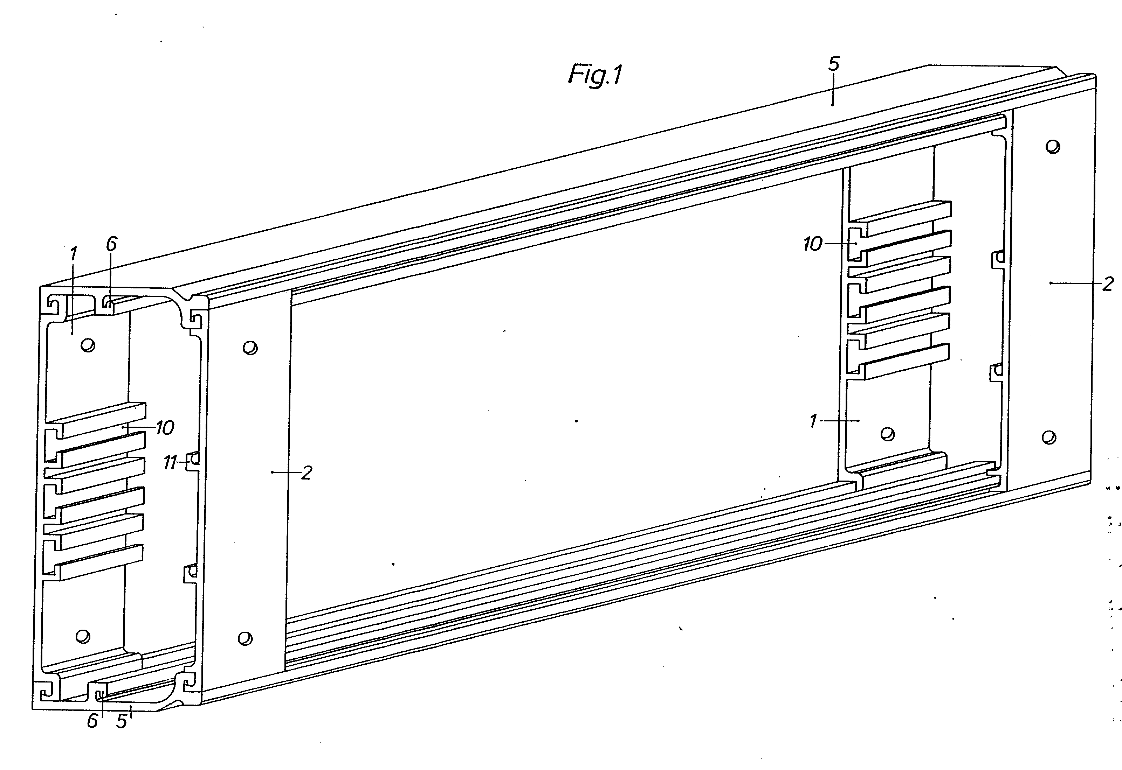

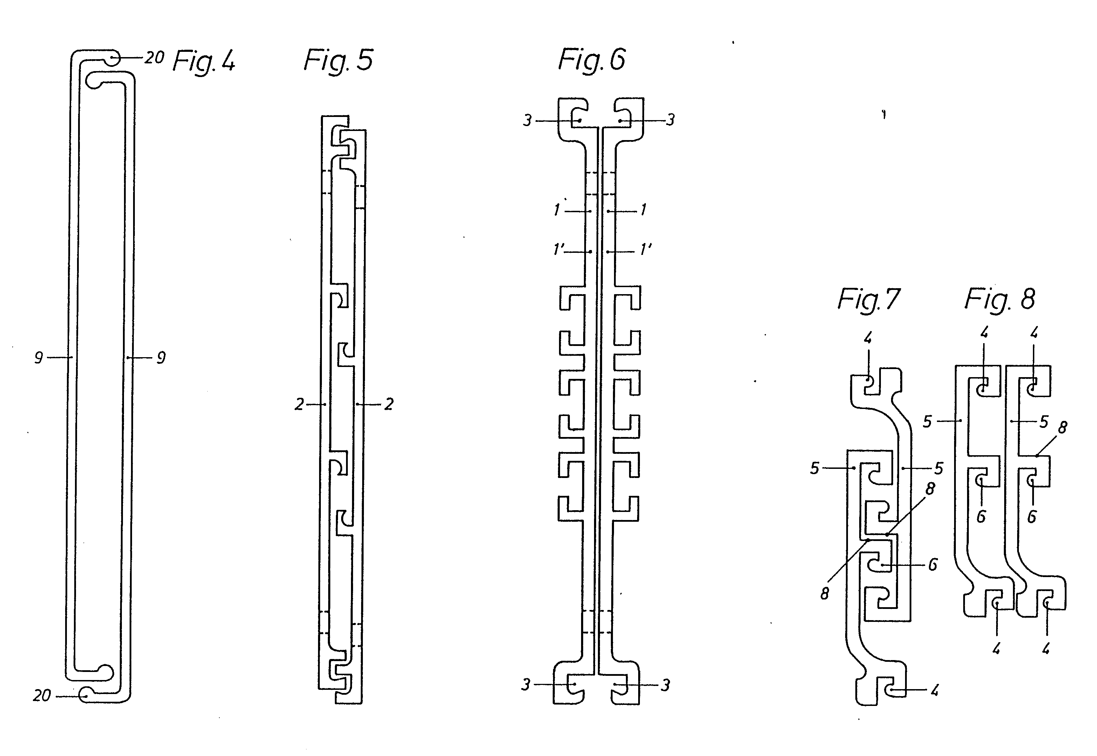

In Fig. 1 ist der erfindungsgemäße Kabelführungskanal ohne Innenbestückung dargestellt. Für die Befestigung an Wänden werden zunächst die Wandklammern 1 in Abständen an den Wänden montiert. Bei lockerer Befestigung derselben werden sodann beidseitig die Seitenwände 5 eingerastet. Dabei rasten ihre Einschnappwulste in die Einschnappnuten 3 (Fig. 6) der Wandklammern 1 ein. Die Wandklammern können dann endgültig festgeschraubt werden. Ebenso ist eine Montage der Wandklammern 1 mit eingerasteten Seitenwänden 5 möglich. Danach werden vorderseitig die Verschlußklammern 2 in die Einschnappwulste 4 (Fig. 7) der Seitenwände 5 eingerastet. Letztendlich wird der Kanal durch den Verschlußdeckel 9 (Fig. 4) abgedeckt.

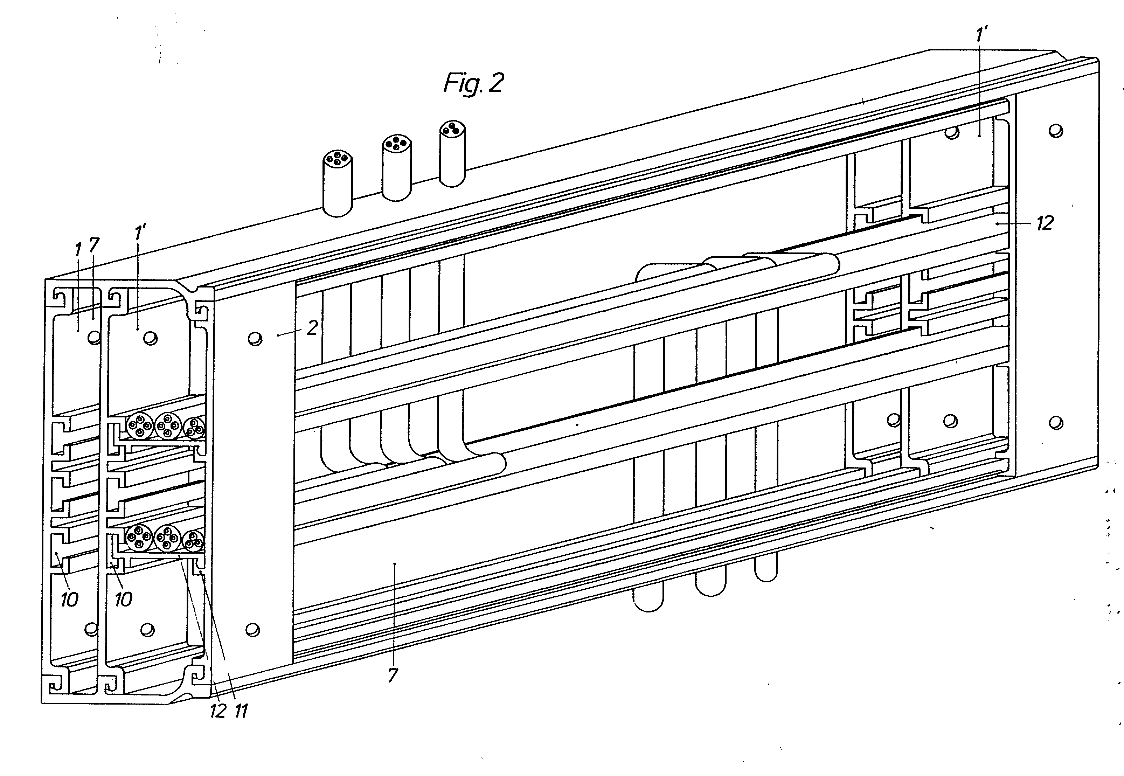

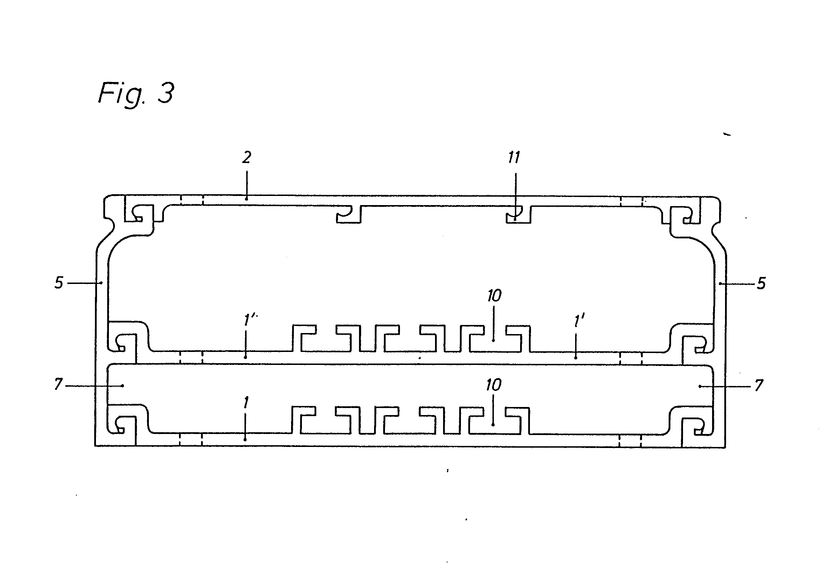

Die Fig. 2 zeigt einen bestückten Kanal. Zur Bildung eines Rangierraumes 7, der ein sauberes Ein-und Ausführen der Kabel erlaubt, wird eine Zwischenklammer 1' verwendet, die in der Ausführung der Wandklammer 1 entspricht. Auch die Zwischenklammer 1' wird in ein schienenartiges Halteelement 6 (Fig. 7) eingerastet, welches auf der Innenfläche der Seitenwand 5 außermittig angeordnet ist. Des weiteren ist die Wandklammer 1 mit C-förmigen Halteleisten 10 und die Verschlußklammer 2 mit L-förmigen Einschnapphalterungen 11 ausgestattet. Sie dienen der Verrastung und Halterung von Kabeltrennwänden 12. Einige dieser Einzelheiten sind nochmals in der Schnittzeichnung gemäß Fig. 3 gezeigt.

In den Fig. 4 bis 8 ist die Stapelfähigkeit der einzelnen Kanalteile dargestellt. In Fig. 4 sind zwei Verschlußdeckel 9, in Fig. 5 zwei Verschlußklammern 2 und in Fig. 6 zwei Wand-bzw. Zwischenklammern 1 und 1' dargestellt. Die Fig. 7 zeigt im Querschnitt ineinandergekehrte Seitenteile 5 mit ihren Einschnappwulsten 4. Außerdem ist ersichtlich, daß die Halteelemente 6 mit Anlageflächen 8 ausgebildet sind, um so ein anschmiegsames Ineinanderstapeln zweier Seitenwände 5 zu ermöglichen.

Aus der Fig. 8 ist zu erkennen, daß die Einschnappwulste 4 auf der Verschlußseite soweit abgekröpft sind, daß sie auch normal aufeinandergelegt eine günstige Raumnutzung erlauben.

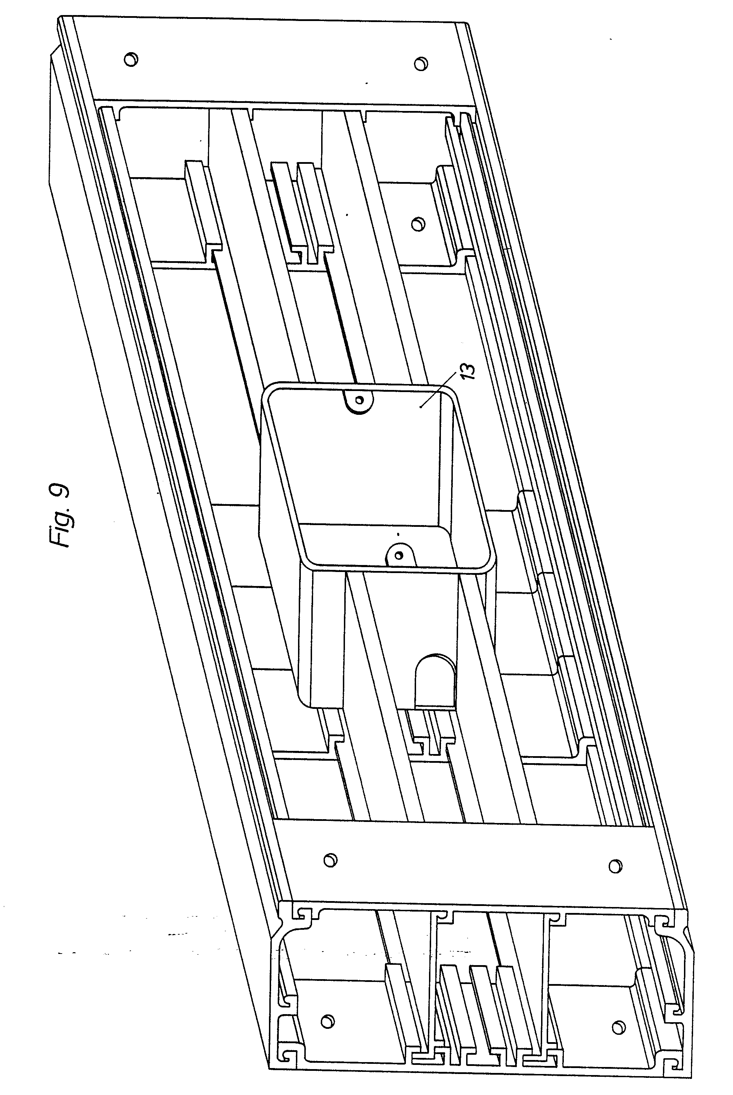

Durch Einrastung von ein oder zwei weiteren Wandklammern 1 läßt sich an beliebiger Stelle auch eine Schalterdose 13 montieren, wie dies die Fig. 9 zeigt.

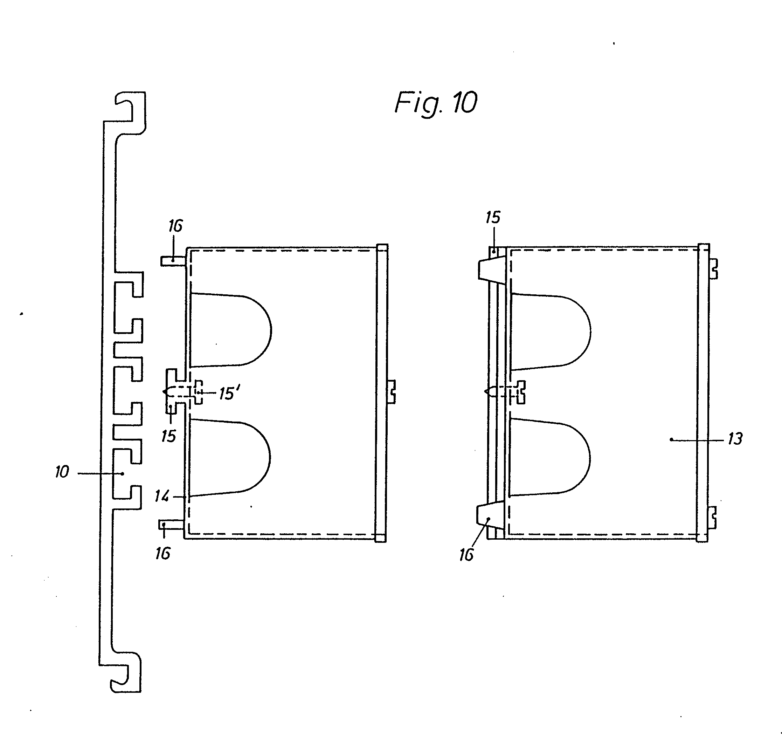

Die Fig. 10 zeigt die Halterung der Schalterdose in der Seitenansicht. Hierfür werden T-förmige Halteschienen 15 der Dose 13 in die Halteschiene 10 der Wandklammer 1 eingeschoben. Am Boden 14 der Dose 13 sind Stützfüße 16 angebracht; sie dienen einer verbesserten Auflage. Eine Befestigungsschraube 15′ dient der endgültigen Arretierung der Dose 13 in der Schiene 10.

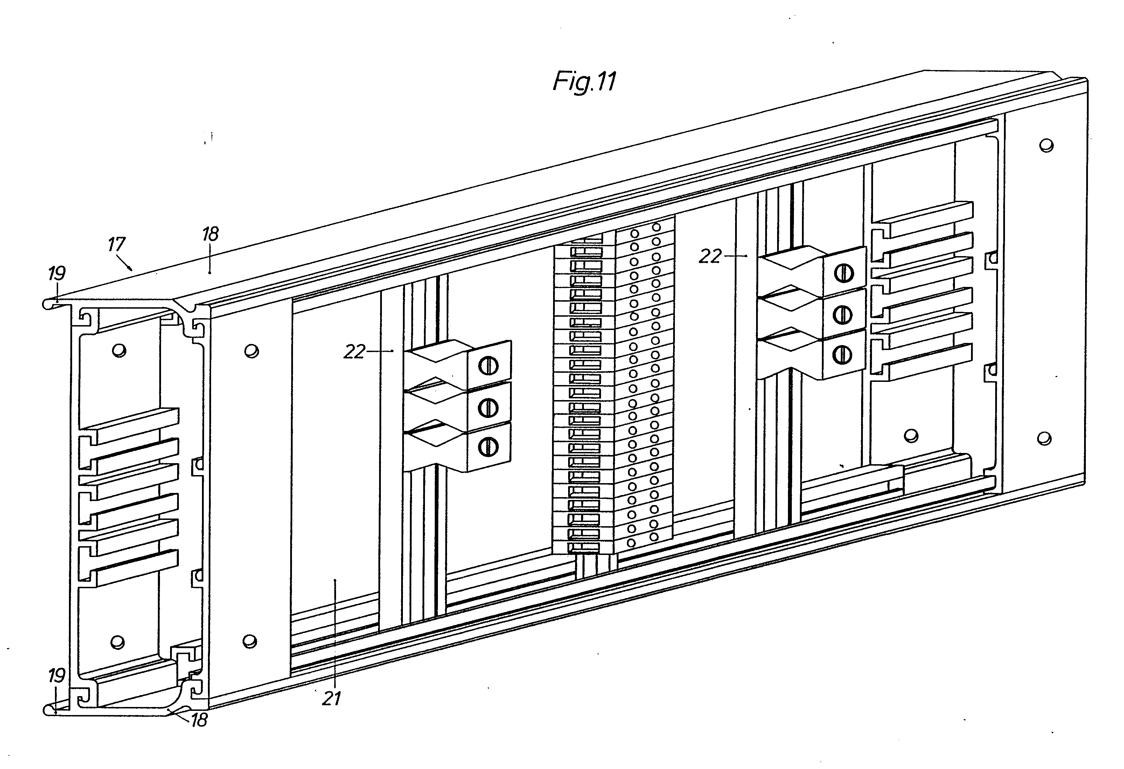

Fig. 11 zeigt ein Aufbauelement 17. Es entspricht im wesentlichen den Einzelheiten des Gegenstandes gemäß Fig. 1. Lediglich die Seitenwände 18 sind beim Aufbauelement 17 mit einem Fortsatz 19 ausgebildet, der völlig den Einschnappwulsten 20 des Verschlußdeckels 9 entspricht. Dieses Aufbauelement 17 wird anstatt dem Verschlußdeckel auf einen fertigmontierten Kabelkanal aufgesetzt. Es können auch insgesamt drei übereinander aufgesetzte Kanäle montiert werden. Damit kann das rückwandlose Kanalsystem einen Kanalraum von der maximalen dreifachen Kanaltiefe schaffen.

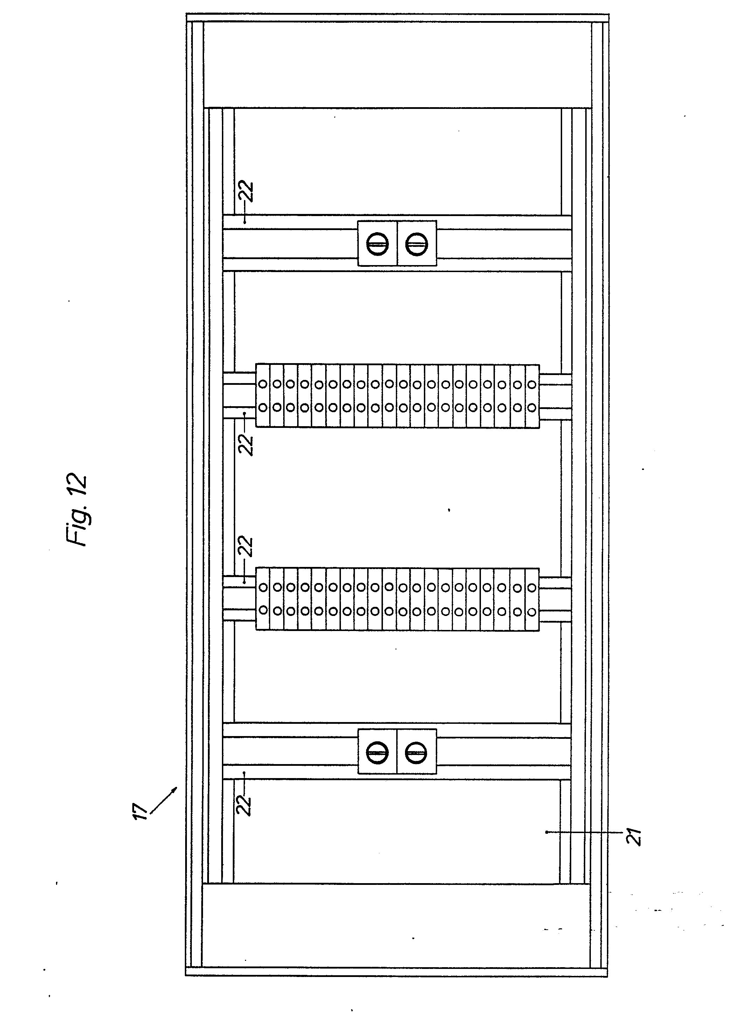

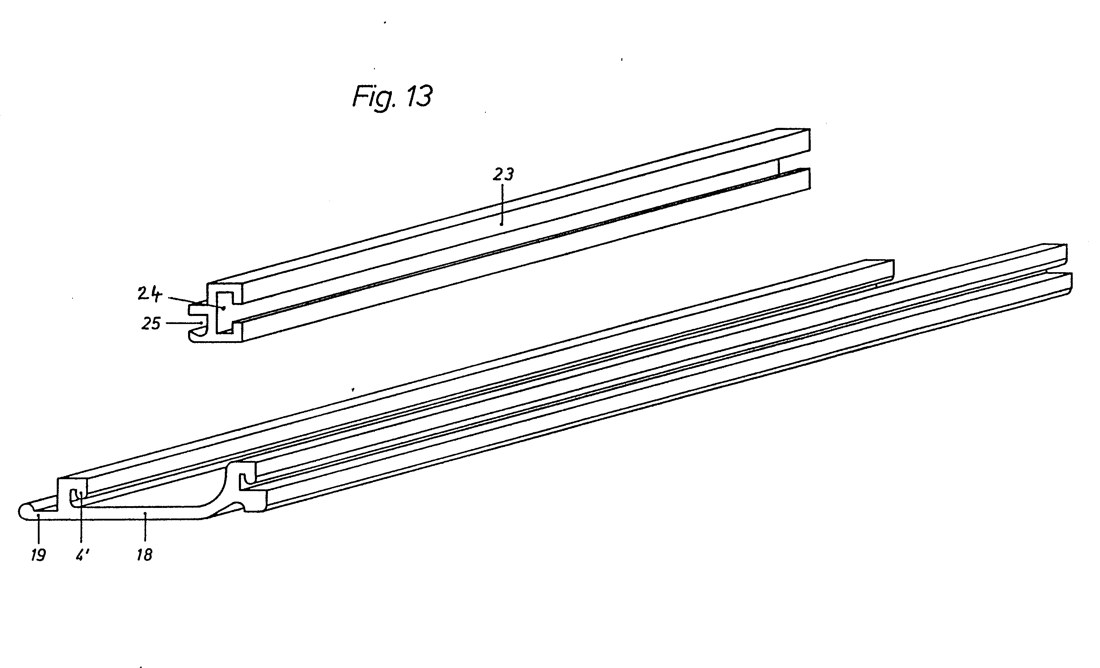

Eine weitere Ausbildung des Kanalsystems nach der Erfindung führt gemäß den Fig. 11 und 12 zu einem auf einen Kanalabschnitt aufsetzbaren Klemmkasten 21, in dem Befestigungsschienen 22 für die Halterung von Klemmleisten montiert sind. Die Befestigungsschienen 22 werden wiederum an Stecknutenleisten 23 gehalten, die für diesen Zweck gemäß Fig. 13 vorderseitig einen T-förmigen Aufnahmeraum 24 und rückseitig Einschnappnuten 25 zur Einrastung in die Einschnappwulste 4′ der Seitenwände 18 aufweisen.

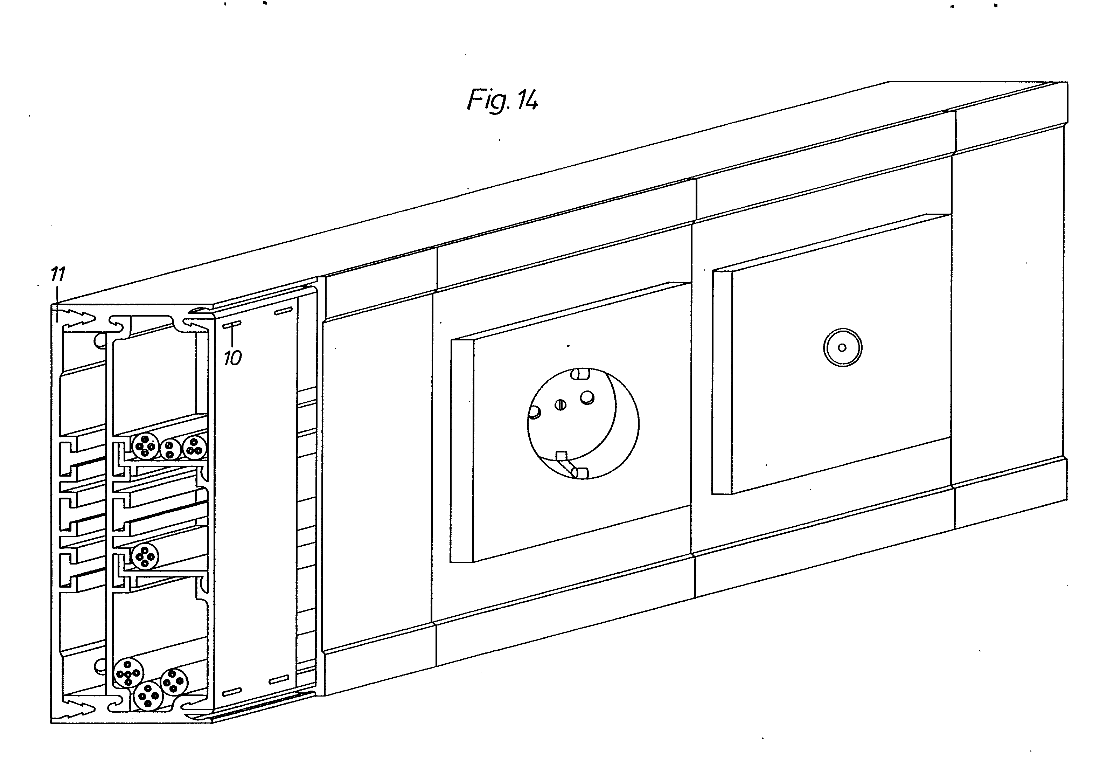

In den Figuren 14 bis 24 ist der Kabelführungskanal mit einer weiteren Ausführungsmöglichkeit bezüglich der Verrastelemente dargestellt. Nach dieser Ausführungsform können sämtliche Einzelteile des Kabelkanals von einer Seite aus - nämlich von vorn - aufeinandergesteckt werden, so wie es aus der perspektivischen Darstellung des Kabelführungskanals gemäß Fig. 14 ersichtlich ist.

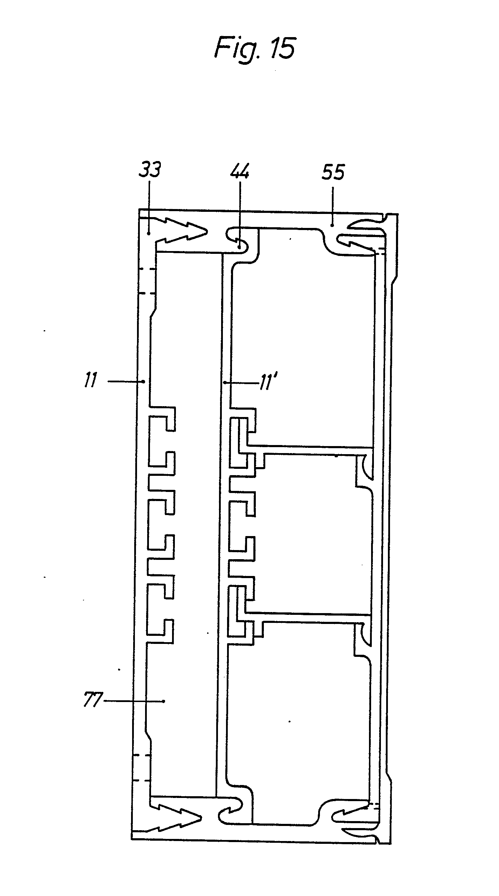

Aus Fig. 15 sind die Einzelheiten durch die querschnittliche Darstellung ersichtlich, insbesondere ist zu ersehen, daß durch die Zwischenklammer 11′ der Rangierraum 77 gebildet wird.

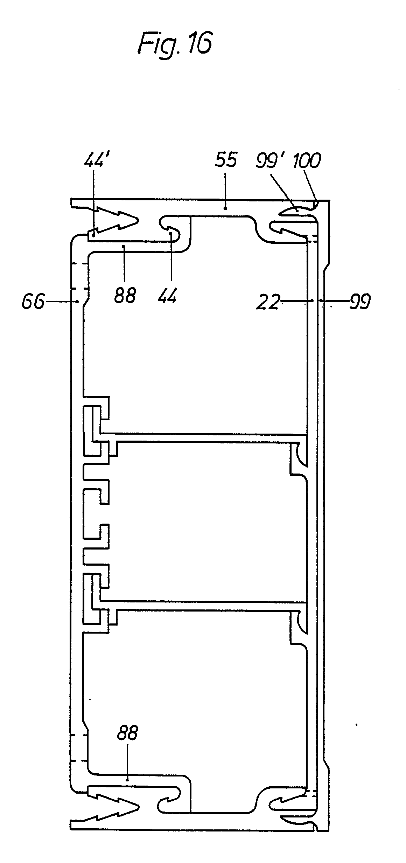

Die Fig. 16 zeigt in querschnittlicher Darstellung der Kabelführungskanal im Schnittbereich einer angesetzten Geräteklammer 66. Dabei ist zu ersehen, daß die hier nicht bezeichneten Halteschienen nicht nur für die Halterung von Geräten, sondern auch für die Halterung von Kabeltrennwänden geeignet sind.

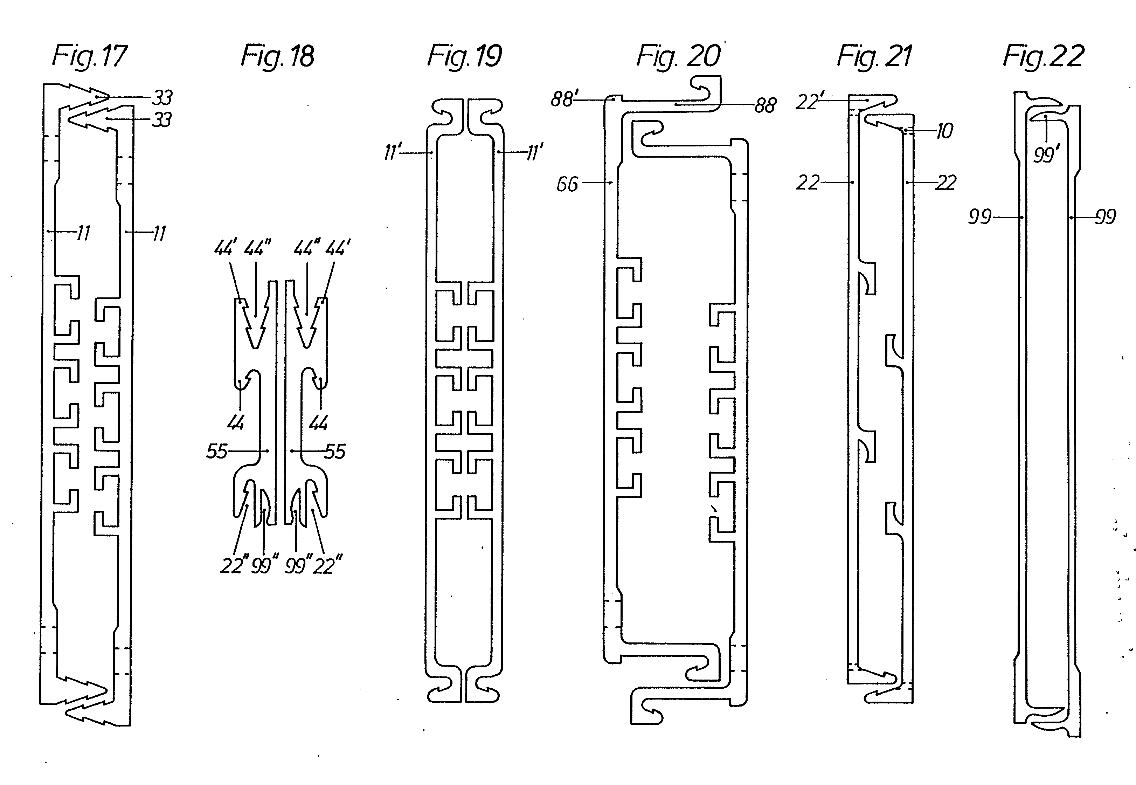

In den Fig. 17 bis 22 sind sämtliche Einzelteile des Kabelführungskanals im Querschnitt dargestellt, so wie sie sich für den Transport und für die Verpackung raumsparend zusammenfügen und stapeln lassen.

So ist zunächst gemäß Fig. 17 die Wandklammer 11 dargestellt, die als Halteglieder beidseitig mit rechtwinklig abstehenden Aufsteckleisten 33 versehen ist, die zum Ende hin verjüngt und für eine mehrstufige Verrastung mit mehreren (dargestellt sind nur zwei) beidseitig angeordneten Rastkanten ausgebildet sind. Der Randbereich der Wandklammer 11 ist im Befestigungsbereich verstärkt.

Gemäß Fig. 18 ist die Seitenwand 55 dargestellt. Wandseitig weist diese zunächst eine Nut 44″ auf und vorderseitig eine Nut 22″ und parallel zu der Nut 22″ eine Nut 99″. Die Nut 44″ wird einerseits vom Wandkörper und einer an diesem angeformten Leiste 44′ gebildet, die aber kürzer bemessen ist als die äußere Kante der Seitenwand 55, um im montierten Zustand in die Kehle von Aufsteckleiste 33 und Wandklammerfläche 11 zu drücken (Fig. 14 und 15). Die angeformte Leiste 44′ ist in entgegengesetzter Richtung verlängert und bildet die Halterungsleiste 44, die mit dem Körper der Seitenwand 55 eine weitere Nut für die Aufnahme des abgewinkelten Randes der Zwischenklammer 11′ (Fig. 19) und der Geräteklammer 66 (Fig. 20) bildet. Für die Aufnahme der Verschlußklammer 22 besitzt die Seitenwand 55 vorderseitig - also auf der der Wand abgekehrten Seite - zunächst eine weitere Nut 22″ für die Aufnahme der rechtwinklig abgewinkelten Randteile 22′ der Verschlußklammer 22 gemäß Fig. 21. Parallel zur Nut 22″ besitzt die Seitenwand 55 nach Fig. 18 eine zweite Nut 99″ für die Aufnahme der rechtwinklig vom Verschlußdeckel 99 abgewinkelten Federleiste 99′. Für eine wirkungsvolle Verrastung der Federleiste 99′ in der Nut 99″ ist die Nut 99″ auf der äußeren Seite mittig ausgebaucht und auf der inneren Seite eben ausgebildet; die Federleiste 99′ ist entsprechend angepaßt.

Die Federleiste 99′ und die Nut 99″ sind längenmäßig so aufeinander abgestimmt, daß zur Bildung eines Spaltes 100 die Federleiste 99′ von der Nut 99″ nicht vollständig aufgenommen wird, so wie dies insbesondere die Fig. 16 zeigt.

In der Fig. 19 ist die Zwischenklammer 11′ zur Bildung des Rangierraumes 77 dargestellt. Für eine Verrastung der Zwischenklammer 11′ zwischen den Seitenwänden 55 ist die Zwischenklammer 11′ beidseitig an ihren Enden dreimal rechtwinklig abgewinkelt und bildet letztendlich einen nicht bezifferten Verrastungswulst mit einer innenseitig angebrachten Rastkante für ein Zusammenspiel mit der Rastkante an der Halterungsleiste 44 (Fig. 18).

Fig. 20 zeigt die Geräteklammer 66 mit an ihren Enden rechtwinklig abgewinkelten Halteschenkeln 88, die wiederum emdseitig nach zweifacher Abwinkelung nicht bezifferte Verrastungwülste mit einer innenseitig angebrachten Rastkante für ein Zusammenspiel mit der entsprechenden Rastkante an der Halterungsleiste 44 (Fig. 18) aufweisen. Zur Erhöhung der Halterungsstabilität ist an der Abwinkelungsstelle zwischen Halteschenkel 88 und Auflagefläche der Geräteklammer 66 ein Überstand 88′ vorgesehen, der bei der Montage der Geräteklammer 66 hinter das Ende der angefomten Leiste 44′ der Seitenwand 55 einschnappt. Für zusammenstoßende Seitenwände 55 dienen die Geräteklammern 66 durch Überbrückung ihrer Stoßstellen außerdem noch als Kupplungselemente der aneinanderstoßenden Kabelkanalkörper.

Fig. 21 zeigt ineinandergelegte Verschlußklammern 22 mit an ihren Enden rechtwinklig abgewinkelten Randteilen 22′, die mit mehrstufigen Rastkanten versehen sind für die Aufnahme in den Nuten 22″ der Seitenwand 55. Unmittelbar vor der Abwinkelung der Randteile 22′ sind in der Körperfläche der Verschlußklammern 12 Schlitze 10 so vorgesehen, die den Durchtritt einer Schraubenzieherklinge gestatten, um für ein Lösen der Verschlußklammer 22 aus ihrer Verrastung den Nutspalt 22″ der Seitenwand 55 zu lüften.

In der Fig. 22 sind zwei ineinandergelegte Verschlußdecktl 99 dargestellt. Für eine Verrastung in den Seitenwänden 55 ist dieser Deckel jeweils endseitig rechtwinklig abgewinkelt, um eine Federleiste 99′ mit einer mittig ausgebauchten Form zu bilden. Im Bereich der Fedeleiste 99′ erhält der Verschlußdeckel 99 auf seiner äußeren Fläche eine Verstärkung.

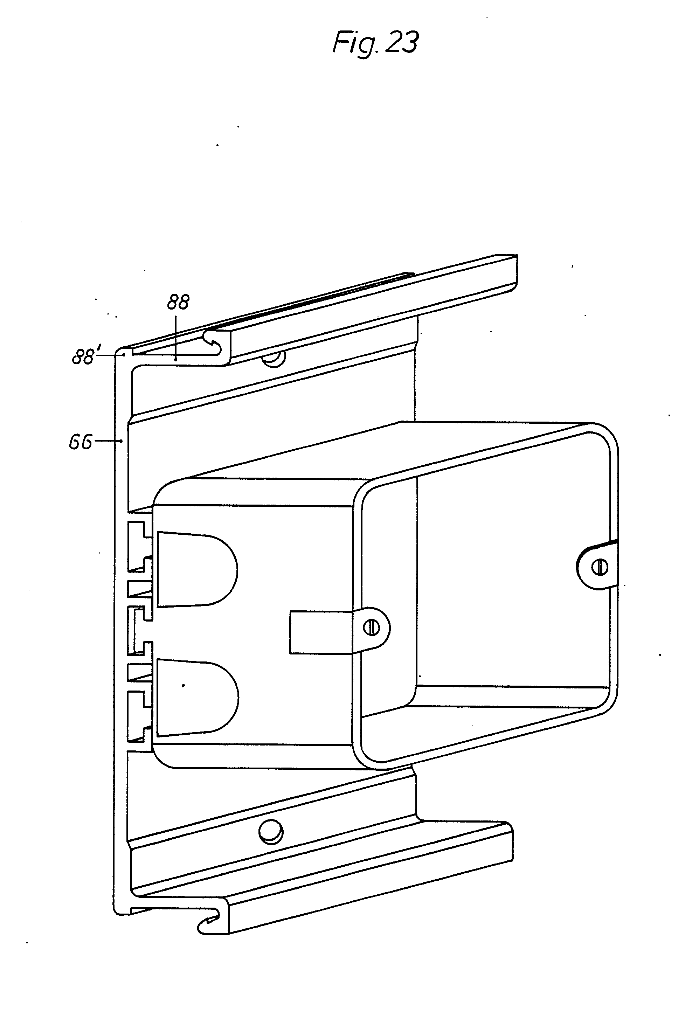

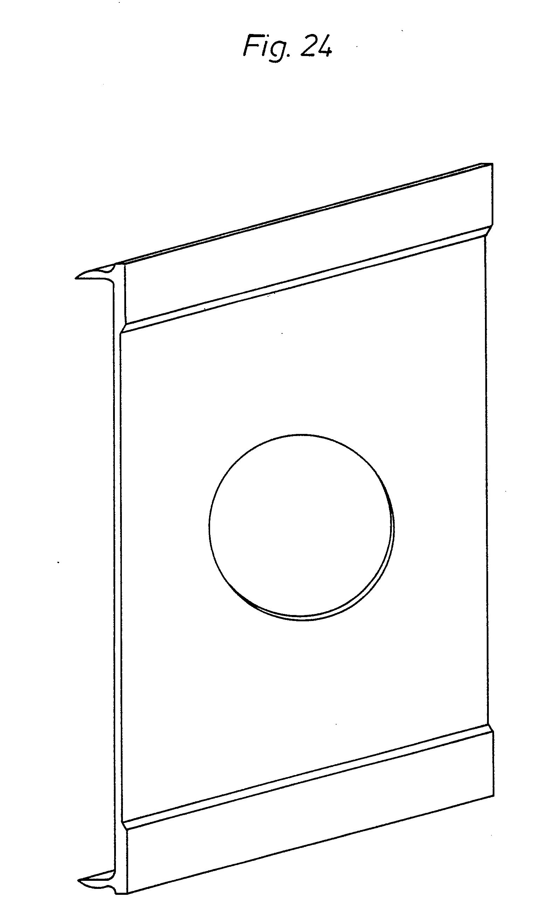

In der Fig. 23 ist die Geräteklammer 66 und das dazugehörige Verschlußdeckelteil in der Fig. 24 perspektivisch dargestellt.

## Ansprüche

1. Kabelführungskanal aus Kunststoff zur Aufnahme von Starkstrom-und Fernmeldekabel und zur Befestigung an Wänden, bestehend aus im Abstand anzuordnenden Halteelementen, auf die beidseitig je eine durchgehende, die Halteelemente überbrückende, leistenförmige Seitenwand mit an den Längsrändern befindlichen Einschnappwulsten aufschnappbar ist, wobei auf die vorderen freien Ränder der Seitenwände schließlich ein durchgehender Verschlußdeckel mit abgewinkelten Leisten aufgerastet ist,
dadurch gekennzeichnet,
daß jedes Halteelement aus einer streifenförmigen Wandklammer (1) und einer streifenförmigen Verschlußklammer (2) besteht, wobei diese Klammern jeweils an ihren Schmalseiten mit Einschnappnuten zur Aufnahme leistenförmiger Einschnappwulste (4) von den Seitenwänden (5) versehen sind,
daß die Seitenwände (5) an ihren inneren Flächen mit außermittig angeordneten, schienenartig ausgebildeten Halteelementen (6) für die Aufnahme von Zwischenklammern (1′) zur Bildung eines Rangierraumes (7) versehen sind, und daß für eine Stapelung ineinandergekehrter Seitenwandteile (5) die Halteelemente (6) an ihren Rücken Anlageflächen (8) bilden (Fig. 7).

2. Kabelführungskanal nach Anspruch 1,
dadurch gekennzeichnet,
daß die Öffnungen der Einschnappnuten (3) der Wandklammern (1) auf die Klammerrückseite gerichtet sind, daß die Einschnappnuten (3) soweit nach innen versetzt angeordnet sind, daß die Ränder der aufgeschnappten Seitenwände (5) mit der Rückfläche der Wandklammer (1) bündig abschließt, und daß das freie Ende des Einschnappnutenrandes so mit einem Ansatz versehen ist, daß für den Einschnappwulst (4) der Seitenwand (5) eine hinterschnittene Fläche ge bildet ist, daß die Einschnappnuten (3) der Wandklammer (1) und die Einschnappwulste (4) der Seitenwände (5) durch drei rechtwinklige Abwinkelungen ihrer Kanten gebildet sind.

3. Kabelführungskanal nach Anspruch 1,
dadurch gekennzeichnet,
daß an den Innenflächen der Wandklammern (1) etwa C-förmige Halteleisten (10) und an den Innenflächen der Verschlußklammern (2) gegenüberliegend im Querschnitt L-förmige Einschnapphalterungen (11) zum Einsetzen von Kabeltrennwänden (12) angeordnet sind.

4. Kabelführungskanal nach den Ansprüchen 1 und 2,
dadurch gekennzeichnet,
daß zur Befestigung einer Schalterdose (13) oder dergl. eine oder zwei zusätzliche Wandklammern (1) auf der Rückseite des Kanals angeordnet sind, daß die Schalterdose (13) in der Halteleiste (10) einschiebbar ist, und daß die Schalterdose an ihrer äußeren Bodenwand (14) mit einer im Querschnitt T-förmigen Halteschiene (15), mit einer Befestigungsschrauben (15′) und an ihren Rändern mit Stützfüßen (16) versehen ist.

5. Kabelführungskanal nach Anspruch 1,
dadurch gekennzeichnet,
daß auf die freien Einschnappwulste (4) der Seitenwände (5) statt der Verschlußdeckel (9) ein Aufbauelement (17, Fig. 11) aufschnappbar ist, daß das Aufbauelement (17) gebildet ist durch Wandklammern (1), Verschlußklammern (2) und zwei Seitenwänden (18), deren Flächenebene über die hinteren Einschnappwulste hinaus mit leistenförmigen Fortsätzen (19) versehen ist, die den Einschnappwulsten (29) der Verschlußdeckel (9) entsprechen, daß das Aufbauelement (17) als aufgedoppelter zweiter oder dritter Kabelführungskanal beliebiger Länge verwendet ist, daß ein kurzstückiges Aufbauelemententeil (17) als Klemmkasten (21) verwendet ist, daß das kurzstückige Aufbauelement (17) im Bereich von Kanalkreuzungen als Rangierraum verwendet ist.

6. Kabelführungskanal nach Anspruch 7,
dadurch gekennzeichnet,
daß zur Halterung von üblichen Befestigungsschienen (22) zum Befestigen von Klemmleisten oder dergl. in die Einschnappwulste (4') der Seitenwände (18) Stecknuten-Leisten (23) einschnappbar sind, die für die Halterung der Befestigungsschienen (22) vorderseitig einen im Querschnitt T-förmigen Aufnahmeraum (24) und rückseitig angeordnete Einschnappnuten (25) aufweisen.

7. Kabelführungskanal aus Kunststoff zur Aufnahme von Starkstrom-und Fernmeldekabel und zur Befestigung an Wänden, bestehend aus im Abstand anzuordnenden Halteelementen, auf die beidseitig je eine durchgehende, die Halteelemente überbrückende, leistenförmige Seitenwand mit an den Längsrändern befindlichen Einschnappwulsten aufschnappbar ist, wobei vorderseitig auf die freien Ränder der Seitenwände ein Verschlußdeckel mit abgewinkelten Leisten aufgerastet ist,
dadurch gekennzeichnet,
daß jedes Halteelement aus einer streifenförmigen Wandklammer (11) und einer streifenförmigen Verschlußklammer (22) besteht, daß die Wandklammer (11) für ein Aufstecken der Seitenwände (55) mit beidseitig von der Wandklammerfläche rechtwinklig abstehenden Aufsteckleisten (33) versehen ist, die zum Ende hin verjüngt sind für eine mehrstufige Verrastung mit mehreren, beidseitig angeordneten Rastkanten ausgestattet ist, daß die Seitenwand (55) zur Verrastung mit der Aufsteckleiste (33) der Wandklammer (11) eine Nut (44″) aufweist, die auf der inneren Seite von einer an die Wandklammer (11) angeformten Leiste (44') und den Seitenwandkörper gebildet ist, daß die angeformte Leiste (44') nach der entgegengesetzten Seite verlängert ist und eine Halterungsleiste (44) mit einer Hinterschreidung bildet, daß die Seitenwand (55) auf der dem Verschlußdeckel (99) zugewandten Seite zunächst eine Nut (22″) mit hinterschnittenen Kanten für die Verrastung der Verschlußklammer (22) aufweist, daß parallel zur Nut (22″) in der Seitenwand (55) eine weitere Nut (99″) vorgesehen ist, die der Aufnahme einer abgewinkelten Federleiste (99') des Verschlußdeckels (99) dient.

8. Kabelführungskanal nach Anspruch 7,
dadurch gekennzeichnet,
daß die angeformte Leiste (44') der Seitenwand

(55) kürzer bemessen ist als die äußere Kante der Seitenwand (55), so daß die Leiste (44') in die Kehle von Aufsteckleiste (33) und der Fläche der Wandklammer (11) drückt, und daß die äußere Kante der Seitenwand (55) bündig mit der Rückseite der Wandklammer (11) abschließt.

9. Kabelführungskanal nach Anspruch 7,
dadurch gekennzeichnet,
daß die für die Bildung eines Rangierraumes (77) dienende Zwischenklammer (11') jeweils an ihren Schmalseiten dreimal so abgewinkelt ist, daß sich eine Nut mit Hinterschneidung bildet.

10. Kabelführungskanal nach Anspruch 7,
dadurch gekennzeichnet,
daß die Federleiste (99') zur Erzielung einer Rastwirkung auf der einen Seite eben und auf der anderen Seite gewölbt ausgeführt ist, und daß die Federleiste (99') und die dazugehörige Nut (99') in der Seitenwand (55) so ausgeführt sind, daß zwischen Seitenwandkante und dem bündig mit der äußeren Seitenwandfläche (55) abschließenden Verschlußdeckel (99) ein Spalt (100) verbleibt.

11. Kabelführungskanal nach Anspruch 7,
dadurch gekennzeichnet,
daß zur Montage von Geräten und zur Kupplung zusammenstoßender Seitenwände (55) im Kabelführungskanal Geräteklammern (66) vorgesehen sind, die aus einer Anlagefläche und zwei beidseitig rechtwinklig abstehenden Halteschenkeln (88) bestehen, daß die Halteschenkel (88) zweimal abgewinkelt sind und eine Nut mit Hinterschneidung bilden zur Verrastung an der Halterungsleiste (44) der Seitenwände (55), daß die Geräteklammer (66) an der Abwinkelung des Schenkels (88) mit einem Überstand (88') versehen ist, der hinter die angeformte Leiste (44') der Seitenwand (55) einschnappt (Fig. 16), und daß eingebaute Geräte mit den Geräten angepaßten Verschlußdeckelteilen (Fig. 24) abgedeckt sind.

12. Kabelführungskanal nach Anspruch 7,
dadurch gekennzeichnet,
daß die Verschlußklammer (22) mit beidseitig rechtwinklig abgewinkelten Randteilen (22') zum Einsetzen in die Nuten (22″) der Seitenwände (55) versehen ist, und daß die Verschlußklammer (22) auf ihrer vorderen Seite mit Schlitzen (10) für den Durchtritt einer Schraubenzieherklinge ausgestattet ist.

13. Kabelführungskanal nach Anspruch 7,
dadurch gekennzeichnet,
daß die abgewinkelten Randteile (22') der Verschlußklammer (22) mit demselben Profil ausgebildet ist wie die Federleiste (99') der Verschlußklammer (99), und daß die Nut (22″) der Seitenwand (55) ebenso ausgebildet ist wie die benachbarte Nut (99″).

14. Kabelführungskanal nach Anspruch 7, dadurch gekennzeichnet,

daß der Verschlußdeckel (99) im Bereich der Federleisten (99') und die Wandklammer (11) im Bereich ihrer Aufsteckleisten (33) verstärkt ausgebildet sind.

*Fig.1*

0 271 891

*Fig. 2*

0 271 891

0 271 891

Fig. 3

Fig. 4

20

9 — — 9

20

Fig. 5

2 — — 2

Fig. 6

3 — — 3

1 — — 1

1' — — 1'

3 — — 3

Fig. 7

4

5 — — 5

8

6

8

Fig. 8

4    4

5 — — 5
8

6    6

4    4

4

0 271 891

Fig. 9

0 271 891

Fig. 10

Fig.11

0 271 891

Fig. 12

17

22    22    22    22

21

0 271 891

Fig. 13

23

24

25

19    4'    18

0 271 891

Fig. 14

0 271 891

*Fig. 15*

## Fig. 16

Fig.22

Fig.21

Fig.20

Fig.19

Fig.18

Fig.17

Fig. 23

88

88'

66

Fig. 24